# EUROPEAN PATENT APPLICATION

(11) **EP 4 726 658 A1**
(43) Date of publication of application: **15.04.2026**
(21) Application number: 24818759.3
(22) Date of filing: 07.06.2024
(51) Int. Cl.: G06T 11/60

(54) **MEDIA CONTENT DISPLAY METHOD AND APPARATUS, ELECTRONIC DEVICE, AND STORAGE MEDIUM**

(30) Priority: 07.06.2023 CN 202310673697
(71) Applicant: Beijing Zitiao Network Technology Co., Ltd., Beijing 100190 (CN)
(72) Inventor: WAN, Shiqi, Beijing 100028 (CN); SHU, Siqi, Beijing 100028 (CN)
(74) Representative: Grünecker Patent- und Rechtsanwälte PartG mbB
(86) International application number: PCT/CN2024/097932
(87) International publication number: WO 2024/251228

(57) **Abstract**

Disclosed in embodiments of the present disclosure are a media content display method and apparatus, an electronic device, and a storage medium. The method comprises: acquiring an original image material from a media content generation page, wherein the media content generation page is used for generating target media content for being sent to a second user or being published as a work of a first user; and when a target function is enabled, displaying preview media content of a first mode, wherein the preview media content of the first mode comprises a target image material and a target text displayed at a target position, the target image material is determined on the basis of the original image material, the target text comprises a text that is determined on the basis of the target image material and satisfies a preset matching degree condition, and the preview media content of the first mode is used for generating the target media content.

## Description

This application claims the priority of Chinese Patent Application No.202310673697.8, filed on June 7, 2023 entitled " MEDIA CONTENT DISPLAY METHOD AND APPARATUS, ELECTRONIC DEVICE, AND STORAGE MEDIUM ", and the contents disclosed in the above-mentioned Chinese Patent Application are hereby incorporated in its entirety as a part of this application.

### TECHNICAL FIELD

Embodiments of the present disclosure relate to the technical field of computers, in particular to a media content display method and apparatus, an electronic device and a storage medium.

### BACKGROUND

With the continuous development of Internet technology, users can browse various types of multimedia content through the Internet, and different users can share their created media content with each other by way of releasing media content such as videos or images.

### SUMMARY

Embodiments of the present disclosure provide a media content display method and apparatus, an electronic device and a storage medium, which can optimize the existing media content display solutions.

An embodiment of the present disclosure provides a media content display method, including: at a first user side,
acquiring original image material from a media content generation page, where the media content generation page is configured to generate target media content, and the target media content is configured to be sent to a second user or posted as a work of a first user; and
displaying preview media content of a first mode in response to a target function being activated, where the preview media content of the first mode includes target image material and a target text displayed at a target position, the target image material is determined according to the original image material, the target text includes a text which satisfies a preset matching degree condition and is determined based on the target image material, and the preview media content of the first mode is configured to generate the target media content.

An embodiment of the present disclosure further provides a media content display apparatus, which is configured at a first user side and includes:
a material acquisition module, configured to acquire original image material from a media content generation page, wherein the media content generation page is configured to generate target media content, and the target media content is configured to be sent to a second user or posted as a work of a first user; and
a content display module, configured to display preview media content of a first mode in response to a target function being activated, wherein the preview media content of the first mode includes target image material and a target text displayed at a target position, the target image material is determined according to the original image material, the target text includes a text which satisfies a preset matching degree condition and is determined based on the target image material, and the preview media content of the first mode is configured to generate the target media content.

An embodiment of the present disclosure further provides an electronic device, including:
one or more processors; and
a storage device configured to store one or more programs,
where the one or more programs, when executed by the one or more processors, cause the one or more processors to realize the media content display method provided by an embodiment of the present disclosure.

An embodiment of the present disclosure further provides a storage medium including computer-executable instructions, where the computer-executable instructions, when executed by a computer processor, perform the media content display method provided by an embodiment of the present disclosure.

### BRIEF DESCRIPTION OF DRAWINGS

The above and other features, advantages and aspects of embodiments of the present disclosure will become more apparent with reference to the following exemplary embodiments taken in conjunction with the accompanying drawings. Throughout the drawings, the same or similar reference numerals indicate the same or similar elements. It should be understood that the drawings are schematic, and parts and elements are not necessarily drawn to scale.
Fig. 1 is a flowchart of a media content display method provided by an embodiment of the present disclosure;
Fig. 2 is a schematic diagram of an interface provided by an embodiment of the present disclosure;
Fig. 3 is a flowchart of another media content display method provided by an embodiment of the present disclosure;
Fig. 4 is a schematic diagram of an interface interaction provided by an embodiment of the present disclosure;
Fig. 5 is a schematic structural diagram of a media content display apparatus provided by an embodiment of the present disclosure; and
Fig. 6 is a schematic structural diagram of an electronic device provided by an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be embodied in various forms and should not be construed as limited to the embodiments set forth here, but rather, these embodiments are provided for a more thorough and complete understanding of the present disclosure. It should be understood that the drawings and embodiments of the present disclosure are only used for illustrative purposes, and are not used to limit the scope of protection of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "comprising/including" and its variants are in an opening sense, that is, " comprising/including but not limited to". The term "based on" is "at least partially based on". The term "one embodiment" means "at least one embodiment"; the term "another embodiment" means "at least one additional embodiment"; and the term "some embodiments" means "at least some embodiments". Related definitions of other terms will be given in the following description.

It should be noted that the concepts of "first" and "second" mentioned in the present disclosure are only used to distinguish different devices, modules or units, and are not used to limit the order or interdependence of the functions performed by these devices, modules or units.

It should be noted that the modifiers such as "a/an" and "a plurality of" mentioned in the present disclosure are schematic rather than limiting, and those skilled in the art should understand that unless the context clearly indicates otherwise, they should be understood as "one or more".

Names of messages or information exchanged among a plurality of devices in the embodiments of the present disclosure are only used for illustrative purposes, and are not used to limit the scope of these messages or information.

It can be understood that before using the technical solutions disclosed in various embodiments of the present disclosure, users should be informed of the types, scope of use, use scenarios, etc. of personal information involved in the present disclosure in an appropriate way according to relevant laws and regulations, and authorization from the users should be acquired.

For example, in response to receiving the user's active request, prompt information is sent to the user to clearly remind the user that the operation requested by the user will require obtaining and using the user's personal information. Therefore, the user can autonomously choose whether to provide personal information to software or hardware such as electronic devices, application programs, servers or storage media that perform the operation of the technical solutions of the present disclosure according to the prompt information.

As an optional but non-limiting implementation, in response to receiving the user's active request, the way to send the prompt information to the user can be, for example, a pop-up window, in which the prompt information can be presented in the form of text. In addition, the pop-up window can also carry a selection control for the user to choose "agree" or "disagree" to provide personal information to the electronic device.

It can be understood that the above process of notifying and obtaining user authorization is only schematic, and does not limit the implementation of the present disclosure. Other ways that satisfy relevant laws and regulations can also be applied to the implementation of the present disclosure.

It can be understood that the data involved in the technical solutions (including but not limited to the data itself, data acquisition or use) shall comply with the requirements of corresponding laws, regulations and relevant provisions.

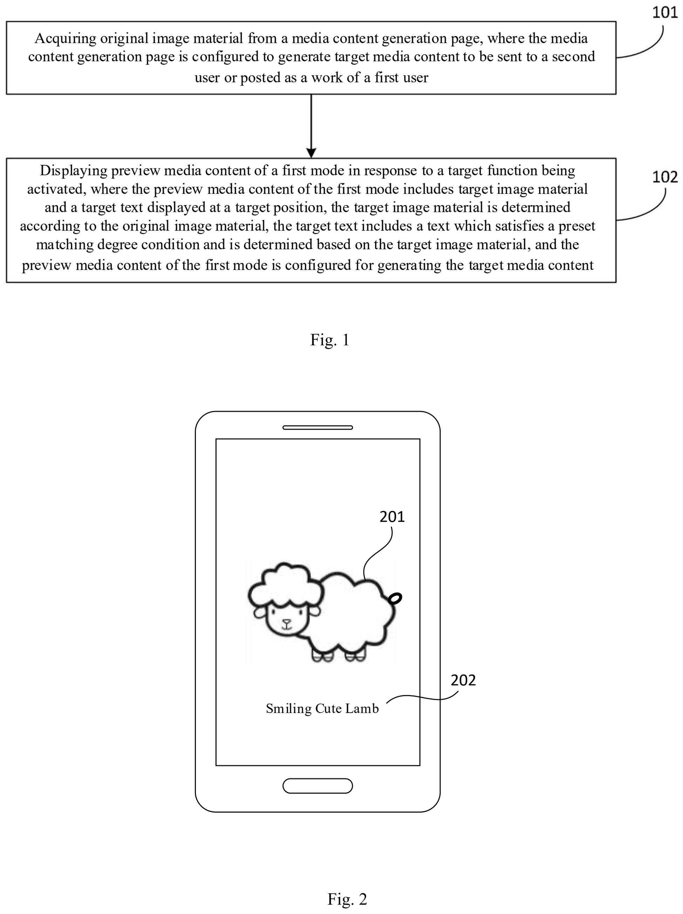

Fig. 1 is a schematic flowchart of a media content display method provided by an embodiment of the present disclosure. The embodiment of the present disclosure is suitable for scenarios of media content display. The method can be implemented by a media content display apparatus, which can be implemented in the form of software and/or hardware, or alternatively, by an electronic device, which can be a mobile terminal such as a mobile phone, a smart watch, a tablet computer and a personal digital assistant, or a personal computer (PC) terminal or a server.

As shown in Fig. 1, in a possible embodiment, the method includes, at a first user side:
Step 101: acquiring original image material from a media content generation page, where the media content generation page is configured to generate target media content to be sent to a second user or posted as a work of a first user.

In the embodiment of the present disclosure, the original image material can be determined according to a user operation, which can be, for example, a shooting operation or a material selection operation. The original image material may include at least one original image and/or at least one original video. Accordingly, the following target image material may include at least one target image and/or at least one target video.

Optionally, the media content generation page can be a shooting page, for example, a user can trigger a shooting operation in the shooting page, and an image or video is collected by an image acquisition device such as a camera of an electronic device, so as to obtain the corresponding original image material. The media content generation page can also be a material selection page. For example, the user can input the material selection operation in the material selection page, and take the selected image and/or video as the original image material. The optional materials displayed in the material selection page can be originated from, for example, the draft media content in the local electronic device or in the application program. Optionally, when the media content generation page is a shooting page, it can also jump from the shooting page to the material selection page.

For example, the first user can be understood as a user currently using an electronic device, and the second user can be any user different from the first user. A first user can trigger the generation of target media content by operating an electronic device, and can send the generated target media content to a second user, and the sending mode is not limited, for example, the generated target media content may be sent to a second user participating in instant messaging through an instant messaging window. The generated target media content can also be posted as a media work created by the first user.

Step 102: displaying preview media content of a first mode in response to a target function being activated, where the preview media content of the first mode includes target image material and a target text displayed at a target position, the target image material is determined according to the original image material, the target text includes a text which satisfies a preset matching degree condition and is determined based on the target image material, and the preview media content of the first mode is used for generating the target media content.

For example, a target function can be added, which can be realized as automatic text matching of image materials, and the target function can be activated or off according to the system configuration or the user's own settings.

For example, after acquiring the original image material, target image material can be determined according to the original image material, and the target image material can be understood as image material contained in the preview media content. The target image material can be the original image material itself, or image material obtained by preset processing of the original image material. For example, the preset processing can include size adjustment, color adjustment, trimming or editing, or adding stylized effects and sticker material to the original image material. It can be understood that, when the user turns on the target function, it can automatically process the original image material into the target image material and add the corresponding target text at the same time.

For example, the preview media content of the first mode can be understood as preview media content obtained by automatically adding text on the basis of the target image material. When the target function is activated, the text satisfying the preset matching degree condition with relative to the target image material is automatically determined. The text can include words and/or symbols, and symbols can include punctuation marks and emoticons. The preset matching degree condition can be determined based on the similarity between the image content and the text content. For example, the text satisfying the preset matching degree condition with relative to the target image material can be screened out from a preset text library according to the target image material. For another example, it is also possible to recognize the image content of the target image material, and then generate a text satisfying the preset matching degree condition with relative to the image content. It can be understood that the recognition of the image content of the target image material is triggered by a user with the full authorization of the user.

Optionally, the matching degree may be determined based on all or part of the target image material. For example, when there is a plurality of target images, the text satisfying the preset matching degree condition with relative to a first target image is automatically determined. For another example, when there is a plurality of target images, the text satisfying the preset matching degree condition with relative to each target image is automatically determined; accordingly, when displaying the preview media content of the first mode, different target images can be sequentially displayed, and for each target image as displayed, a target text corresponding to a current target image is displayed at the target position corresponding to the current target image. For another example, when the target image material includes at least one target video, the target text includes automatically determined preset text satisfying the preset matching degree condition with relative to a preset video frame in the at least one target video. The preset video frame can be a video frame with a fixed sequence number, such as a first video frame or a last video frame; alternatively, the preset video frame can be dynamically determined, such as an intermediate video frame or a video frame in which a recognized target object appears for the first time. The target object can be, for example, a preset entity, such as a preset commodity, etc.

For example, after the target text is determined, the preview media content of the first mode is displayed; for example, the target image material is displayed and the target text is displayed at the target position. The target position can be the position in the display screen of the target image material, such as the center of the bottom of the screen. The target position can be set in advance; or, it can also be dynamically determined according to the image content in the target image material and/or the text content of the target text.

For example, Fig. 2 is a schematic diagram of an interface provided by an embodiment of the present disclosure. Assuming that the original image material contains a lamb image, the target image material is the original image material itself, and the automatically determined text is "smiling cute lamb", then the preview media content of the first mode can be displayed, that is, the target image material 201 containing a lamb image and the target text 202 can be displayed at the target position.

According to the media content display method provided by the embodiment of the present disclosure, the original image material is acquired from a media content generation page, where the media content generation page is configured to generate target media content to be sent to a second user or posted as a work of a first user; and preview media content of a first mode is displayed under the condition that the target function is activated, where the preview media content of the first mode includes the target image material and the target text displayed at the target position, the target image material is determined according to the original image material, and the target text includes the text which is determined based on the target image material and satisfies the preset matching degree condition, and the preview media content of the first mode is configured to generate the target media content. By adopting the technical solution above, after the original image material is acquired, the target text satisfying a certain matching degree can be automatically matched for the target image material determined according to the original image material, and both the target image material and the target text are included in the displayed preview media content for generating the target media content. In this way, related operations of users such as manually inputting the text can be reduced, and the convenience of media content creation can be improved.

In some embodiments, after displaying the preview media content of the first mode, the method further includes: generating the target media content according to the preview media content of the first mode in response to a preset generation operation. Therefore, it can help the user to generate the target media content conveniently, and the user can be aware of, in advance, the effect of automatic text addition by viewing the preview media content of the first mode.

Optionally, a preset generation control can be displayed, and the target media content can be generated after the user triggers the preset generation control. In an example, after generating the target media content, the user can also trigger the posting of the target media content. Optionally, the preset generation control can be a media content posting control, and the target media content can be generated and posted after the user triggers the media content posting control.

In some embodiments, after displaying the preview media content of the first mode, the method further includes: updating, in response to an editing operation for the target text, the target text in the preview media content of the first mode to a text corresponding to an editing result of the editing operation. In this way, users can edit the target text to satisfy the actual needs of users.

Optionally, the editing operation includes at least one of modifying text content, adjusting text display position, and adjusting text display style. The text display style may include, for example, font, size or color.

For example, the user can trigger the target text through a preset trigger operation such as clicking, to enter an editing state of the target text, and then input the editing operation.

In some embodiments, after displaying the preview media content of the first mode, it further includes: updating, in response to a switching operation for the target text, the target text in the preview media content of the first mode to a next text which satisfies the preset matching degree condition and is determined based on the target image material. Therefore, when the user is not satisfied with the current target text, it can conveniently switch to another text satisfying the preset matching degree condition by inputting the switching operation, which allows to better balance the user's actual needs of text addition and the convenience of text addition.

For example, a switching control can be displayed in the associated position of the target text, and the user can input a switching operation by triggering the switching control. For another example, the user can input a switching operation by inputting, for example, a gesture operation for the target text, e.g., a left-swipe operation.

In some embodiments, the displaying preview media content of a first mode includes: displaying preview media content of a second mode, where the preview media content of the second mode includes the target image material and a plurality of candidate texts, and the candidate texts include texts that satisfy the preset matching degree condition with relative to the target image material; and determining, in response to a selection operation for a target candidate text, the target candidate text as the target text, and displaying the preview media content of the first mode. Therefore, a plurality of texts that satisfy the preset matching degree condition with relative to the target image material can be simultaneously displayed to the user for the user's selection, and the selection efficiency is improved.

For example, a plurality of candidate texts is displayed at the same time in the form of a list or matrix, and the user can input the selection operation for the target candidate text by inputting a trigger operation such as clicking. For example, determining the candidate text clicked by the user as the target candidate text selected by the user, and displaying the preview media content of the first mode.

In some embodiments, the target image material includes material obtained by performing style conversion processing on the original image material. Therefore, the original image material can be subject to a style conversion processing first, and then the text can be added; that is, the preset processing mentioned above can include style conversion processing, so as to satisfy diverse needs of users for media content generation.

Optionally, the original image material can be converted into image material of a target style to obtain the target image material. The target style can be, for example, cute style, comic style or sketch style. The target style can be automatically determined according to the image content of the original image material, and can also be specified by the user.

In some embodiments, the generation of the target text is associated with a corresponding scenario of the media content generation page. Therefore, the generated target text can be more suitable for the image material and the generation scenario of media content.

Optionally, there is no limit to the way the scenario is divided. For example, according to the application scenario division when triggering acquisition, it can also be understood as the scenario division when triggering to enter the media content generation page, such as triggering the acquisition of the original image material in the instant messaging scenario, triggering the acquisition of the original image material in the work creation scenario, and triggering the acquisition of the original image material in the shooting props viewing scenario.

In the embodiment of the present disclosure, the generation of the target text and the mode of associating with the scenario are not limited. Optionally, the target text corresponding to different scenarios have different text styles. The differences in text styles can be reflected in aspects such as text length, text tone, text tense, text rhetoric and whether emoticons are added or not.

In some embodiments, the target text is determined by: inputting the target material into a preset model, where the target material includes all or part of the target image material, and the preset model is configured to determine the similarity between the target material and each text in a preset text library; determining the target text from the preset text library according to the output of the preset model. Therefore, the model can be used to quickly and accurately screen out similar text from the preset text library as the target text.

For example, the preset model can be a preset multimodal model, and the multimodal model can receive a variety of different input methods. For example, in the embodiment of the present disclosure, the target material and the text in the library can be input into the preset multimodal model, and then the similarity between them can be determined. The output of the preset multimodal model can be the similarity between the target material and each text in the preset text library, and the corresponding text in the library with the highest similarity is determined as the target text; alternatively, texts in the library are ranked in descending order according to the similarity, and a preset number of texts with higher rankings can be determined as the target text.

Exemplary, model parameters in the preset model and/or the preset text library are associated with a corresponding scenario of the media content generation page. Therefore, the preset model can output different results in different scenarios, and different target texts are obtained. Optionally, since different text styles of the target text correspond to different scenarios, different model parameters and/or preset text libraries can be set for different text styles.

In some embodiments, the method further includes: displaying preview media content of a third mode when the target function is inactivated, where the preview media content of the third mode includes the target image material. The preview media content of the third mode can be understood as preview media content that does not contain automatically added text. Therefore, users can flexibly control whether the previewed media content contains automatically added text or not according to their own wishes.

In some embodiments, the displaying preview media content of a first mode in response to a target function being activated includes: entering a media content preview page, and displaying the preview media content of the first mode in the media content preview page in response to the target function being activated; where a switch control is displayed in the media content generation page and/or the media content preview page, and the switch control corresponds to the target function. By displaying the switch control of the target function in the media content generation page and/or the media content preview page, the user can flexibly control whether the target function is activated or not, and the timing of activation.

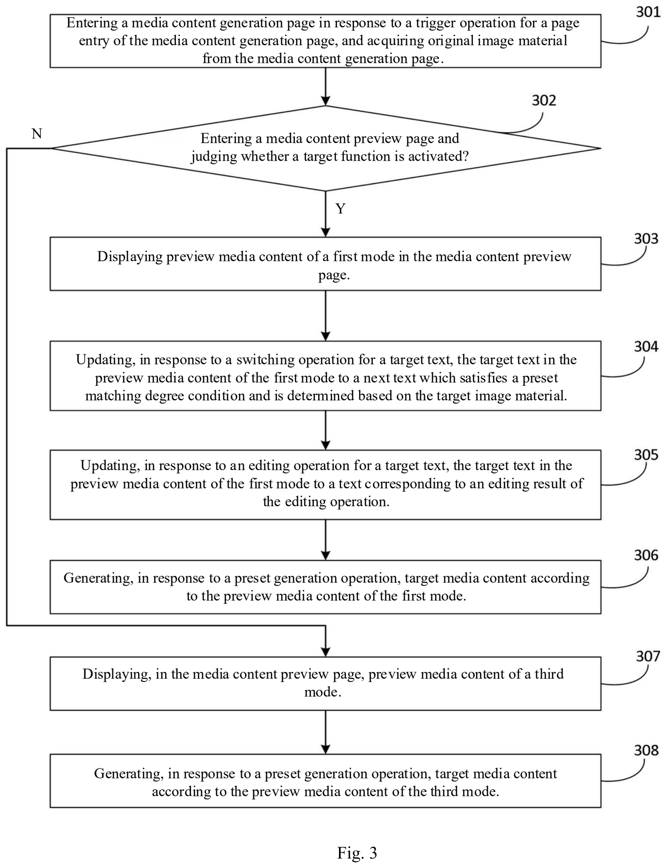

Fig. 3 is a flowchart of another media content display method provided by an embodiment of the present disclosure, which is obtained on the basis of various alternatives in the above embodiment. For example, the method includes the following steps:
Step 301: entering a media content generation page in response to a trigger operation for a page entry of the media content generation page, and acquiring original image material from the media content generation page.

The switch control is displayed in the media content generation page.

For example, the page entry of the media content generation page can be included in an instant messaging scenario page (such as a chat page, etc.), and the page entry can also correspond to a scenario for creating media content work. When the page entry is in different pages, it can correspond to different scenarios of acquiring the original image material.

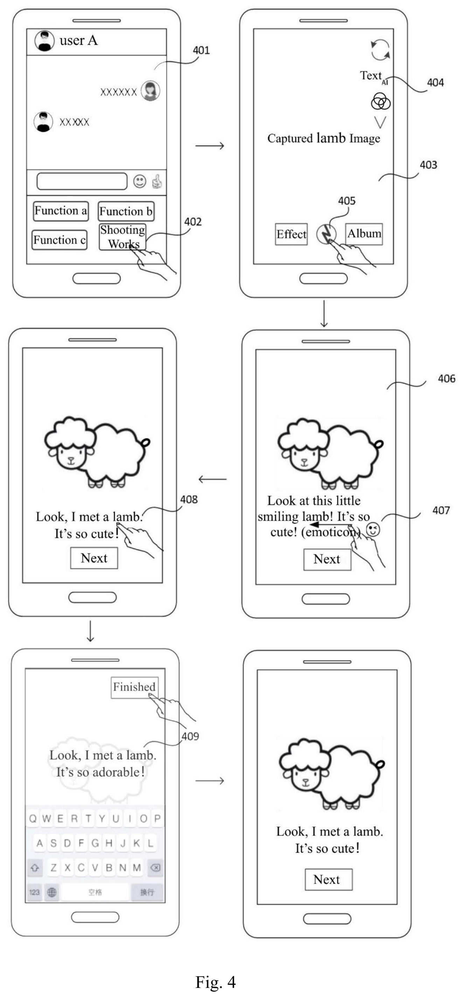

Fig. 4 is a schematic diagram of an interface interaction provided by an embodiment of the present disclosure. As shown in Fig. 4, a page entry, such as "Shooting Works" 402, of the media content generation page is displayed in an instant messaging scenario page 401. After the user clicks on the "Shooting Works" 402, a media content generation page 403 is entered. The media content generation page 403 displays a switch control 404 currently in an on state, and a shooting control 405. If the captured content is a lamb, a lamb image is displayed in the media content generation page 403. When the user clicks on the shooting control 405, the captured image is obtained as the original image material.

Step 302: entering a media content preview page and judging whether a target function is activated or not; if so, executing step 303; if not, executing step 307.

An example of the media content preview page 406 is shown in Fig. 4.

Step 303: displaying preview media content of a first mode in the media content preview page.

For example, a style conversion function switch can also be set. If this function is activated, a style conversion processing is performed on a captured lamb image as the original image material, for example, an animation style conversion processing is performed to obtain an animated lamb image as the target image material. For example, the original image material is input into a style conversion model corresponding to the animation style, and an animated lamb image is obtained. The animated lamb image is input into a preset multimodal model corresponding to the instant messaging scenario, and a plurality of target texts with higher rankings in terms of similarity can be determined from a preset text library. In a second preset page, the animated lamb image and the target text with the highest similarity are displayed, e.g., "Look at this little smiling lamb! It's so cute! (emoticon)" 407 as shown in Fig. 4, where the target text is displayed at the bottom center of the animated lamb image. It should be understood that in the instant messaging scenario of Fig. 4, the style of the generated target text is more suitable for users to communicate and share directly, for example, more emoticons are added to the generated text for chatting.

For convenience of comparative explanation, it is assumed that the page entry of the media content generation page corresponds to the scenario for creating media content, then the model parameters and/or the preset text library in the adopted preset multimodal model will be changed. For example, the determined target text with the highest similarity may be "smiling cute lamb", and its text style leans more towards a description of the image, as compared with the target text in Fig. 4.

Step 304: updating, in response to a switching operation for a target text, the target text in the preview media content of the first mode to a next text which satisfies a preset matching degree condition and is determined based on the target image material.

For example, if the user inputs a left-swipe operation (switching operation) for the currently displayed target text, it can switch to display the target text that ranks second in terms of similarity, e.g., "Look, I met a lamb. It's so cute!" 408 as shown in Fig. 4.

Step 305: updating, in response to an editing operation for a target text, the target text in the preview media content of the first mode to a text corresponding to an editing result of the editing operation.

As shown in Fig. 4, if the user is still not completely satisfied after switching, an editing state may be entered by clicking on the current target tex to edit the target text and get the edited "Look, I met a lamb. It's so adorable!" 409. After editing, the user can click on the "Finished" button so that the updated preview media content in the first mode is displayed.

Step 306: generating, in response to a preset generation operation, target media content according to the preview media content of the first mode.

Step 307: displaying, in the media content preview page, preview media content of a third mode.

The preview media content of the third mode includes the target image material, such as an animated lamb image. If the style conversion function is inactivated, the preview media content of the third mode includes a captured lamb image.

Step 308: generating, in response to a preset generation operation, target media content according to the preview media content of the third mode.

It should be understood by those skilled in the art that for the contents omitted in the description of steps S301-S308 in this embodiment, reference can be made to the relevant description of the corresponding steps in the aforementioned method embodiment, which will not be repeated here.

According to the media content display method provided by the embodiment of the present disclosure, after the original image material is acquired, style conversion processing can be performed on the original image material to obtain the target image material, and a corresponding preset multimodal model is selected according to the actual acquisition scenario, so that target text satisfying certain matching degree can be automatically matched for the target image material, and both the target image material and the target text are included in the displayed preview media content, and the switching and personalized editing of the target text can be supported. In this way, both the user's actual demands for text addition and the convenience of text addition are considered, and the convenience of media content creation is improved.

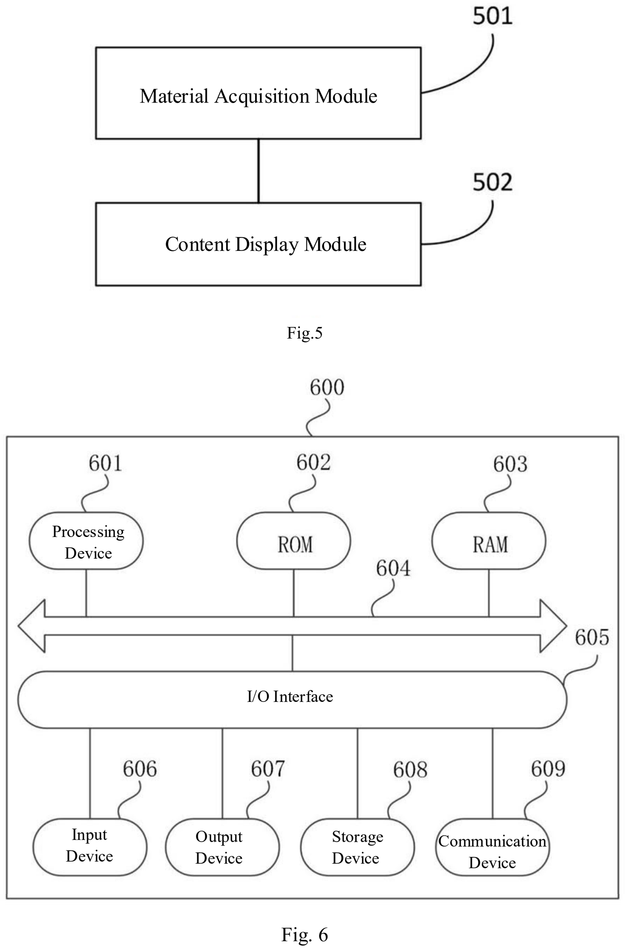

Fig. 5 is a schematic structural diagram of media content display apparatus provided by an embodiment of the present disclosure. As shown in Fig. 5, in a possible implementation, the apparatus includes:
a material acquisition module 501, configured to acquire original image material from a media content generation page, where the media content generation page is configured to generate target media content, and the target media content is configured to be sent to a second user or posted as a work of a first user;
a content display module 502, configured to display preview media content of a first mode in response to a target function being activated, where the preview media content of the first mode includes target image material and a target text displayed at a target position, the target image material is determined according to the original image material, and the target text includes a text which satisfies a preset matching degree condition and is determined based on the target image material, and the preview media content of the first mode is configured to generate the target media content.

According to the media content display apparatus provided by the embodiment of the present disclosure, after the original image material is acquired, the target text satisfying a certain matching degree is automatically matched for the target image material determined according to the original image material, and both the target image material and the target text are included in the displayed preview media content to generate the target media content. In this way, it reduces related operations of users for manually inputting texts and improves the convenience of media content creation.

Optionally, the apparatus further includes a content generation module configured to generate target media content according to the preview media content of the first mode in response to a preset generation operation after the preview media content of the first mode is displayed.

Optionally, the apparatus further includes an editing module configured to update, in response to an editing operation for target text in the preview media content of the first mode, the target text to a text corresponding to an editing result of the editing operation after the preview media content of the first mode is displayed.

Optionally, the apparatus further includes a switching module configured to update, in response to a switching operation for target text in the preview media content of the first mode, the target text to a next text which satisfies the preset matching degree condition and is determined based on the target image material after the preview media content of the first mode is displayed.

Optionally, the content display module includes:
a first display unit, configured to display preview media content of a second mode, where the preview media content of the second mode includes the target image material and a plurality of candidate texts, and the candidate texts include texts that satisfy the preset matching degree condition with relative to the target image material; and
a second presentation unit, configured to determine, in response to a selection operation for a target candidate text, the target candidate text as the target text, and display the preview media content of the first mode.

Optionally, the target image material includes material obtained by performing style conversion processing on the original image material.

Optionally, the target image material includes at least one target image and/or at least one target video.

Optionally, in the case that the target image material includes at least one target video, the target text includes a text satisfying the preset matching degree condition with relative to a preset video frame in the at least one target video.

Optionally, the generation of the target text is associated with a corresponding scenario of the media content generation page.

Optionally, different text styles of the target text correspond to different scenarios.

Optionally, the target text is determined by:
inputting target material into a preset model, where the target material includes all or part of the target image material, and the preset model is configured to determine a similarity between the target material and each text in a preset text library; and
determining a target text from the preset text library according to an output of the preset model.

Optionally, model parameters in the preset model and/or the preset text library are associated with a corresponding scenario of the media content generation page.

Optionally, the apparatus further includes:
a media content display module, configured to display preview media content of a third mode in response to the target function being inactivated, where the preview media content of the third mode includes the target image material.

Optionally, the content display module can be configured to, for example, enter a media content preview page, and display the preview media content of the first mode in the media content preview page in response to the target function being activated;
where a switch control is displayed in the media content generation page and/or the media content preview page, and the switch control corresponds to the target function.

The media content display apparatus provided by the embodiment of the present disclosure can execute the media content display method provided by any embodiment of the present disclosure, and has corresponding functional modules and beneficial effects.

It is worth noting that the units and modules included in the above apparatus are merely divided according to functional logic, but are not limited to the aforementioned division, as long as corresponding functions can be achieved. In addition, specific names of the functional units are merely used for mutual distinguishing, and are not used to limit the scope of protection of the embodiments of the present disclosure.

Fig. 6 is a schematic structural diagram of an electronic device according to an embodiment of the present disclosure. Reference is made to Fig. 6 below, which is a schematic structural diagram of an electronic device (such as a terminal device or a server in Fig. 6) 600 suitable for implementing embodiments of the present disclosure. A terminal device in this embodiment of the present disclosure may include, but is not limited to, mobile terminals such as a mobile phone, a notebook computer, a digital broadcast receiver, a personal digital assistant (PDA), a tablet computer (portable Android device, PAD), a portable media player (PMP), and a vehicle-mounted terminal (e.g., a vehicle navigation terminal), and fixed terminals such as a digital TV and a desktop computer. The electronic device shown in Fig. 6 is merely an example, and shall not impose any limitation on the function and scope of use of the embodiments of the present disclosure.

As shown in Fig. 6, an electronic device 600 may include a processing device (such as a central processing unit, a graphics processor, etc.) 601, which may perform various appropriate actions and processes according to a program stored in a read-only memory (ROM) 602 or a program loaded from a storage device 608 into a random-access memory (RAM) 603. In the RAM 603, various programs and data required for the operation of the electronic device 600 are also stored. The processing device 601, the ROM 602 and the RAM 603 are connected to each other through a bus 604. An input/output (I/O) interface 605 is also connected to the bus 604.

Generally, the following devices can be connected to the I/O interface 605: an input device 606 including, for example, a touch screen, a touch pad, a keyboard, a mouse, a camera, a microphone, an accelerometer, a gyroscope, etc.; an output device 607 including, for example, a liquid crystal display (LCD), a speaker, a vibrator, etc.; a storage device 608 such as a magnetic tape, a hard disk, etc.; and a communication device 609. The communication device 609 may allow the electronic device 600 to perform wireless or wired communication with other devices to exchange data. Although Fig. 6 shows an electronic device 600 with various devices, it should be understood that it is not required to implement or have all the devices as shown. More or fewer devices may alternatively be implemented or provided.

In particular, according to an embodiment of the present disclosure, the process described above with reference to the flowchart can be implemented as a computer software program. For example, an embodiment of the present disclosure includes a computer program product including a computer program carried on a non-transitory computer-readable medium, which contains program code for executing the method shown in the flowchart. In such an embodiment, the computer program can be downloaded and installed from the network through the communication device 609, or installed from the storage device 608, or installed from the ROM 602. When the computer program is executed by the processing device 601, the above functions defined in the method embodiment of the present disclosure are performed.

Names of messages or information exchanged among a plurality of devices in the embodiment of the present disclosure are only used for illustrative purposes, and are not used to limit the scope of these messages or information.

The electronic device provided by the embodiment of the present disclosure belongs to the same inventive concept as the media content display method provided by the above embodiment, and the technical details not described in detail in this embodiment can be found in the above embodiment, and this embodiment has the same beneficial effects as the above embodiment.

An embodiment of the present disclosure provides a computer storage medium storing thereon a computer program that, when executed by a processor, realizes the media content display method provided in the above embodiment.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: acquire original image material from a media content generation page, where the media content generation page is configured to generate target media content, and the target media content is configured to be sent to a second user or posted as a work of a first user; and display preview media content of a first mode in response to a target function being activated, where the preview media content of the first mode includes target image material and a target text displayed at a target position, the target image material is determined according to the original image material, and the target text includes a text which satisfies a preset matching degree condition and is determined based on the target image material, and the preview media content of the first mode is configured to generate the target media content.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases. For example, the material acquisition module can also be described as "a module that acquires original image material from a media content generation page, where the media content generation page is configured to generate target media content, and the target media content is configured to be sent to a second user or posted as a work of the first user".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, there is provided a media content display method, including, at a first user side:
acquiring original image material from a media content generation page, where the media content generation page is configured to generate target media content, and the target media content is configured to be sent to a second user or posted as a work of a first user; and
displaying preview media content of a first mode in response to a target function being activated, where the preview media content of the first mode includes target image material and a target text displayed at a target position, the target image material is determined according to the original image material, and the target text includes a text which satisfies a preset matching degree condition and is determined based on the target image material, and the preview media content of the first mode is configured to generate the target media content.

According to one or more embodiments of the present disclosure, after the displaying preview media content of a first mode, the method further includes:
generating, in response to a preset generation operation, target media content according to the preview media content of the first mode.

According to one or more embodiments of the present disclosure, after the displaying preview media content of a first mode, the method further includes:
updating, in response to an editing operation for a target text, the target text in the preview media content of the first mode to a text corresponding to an editing result of the editing operation.

According to one or more embodiments of the present disclosure, after the displaying preview media content of a first mode, the method further includes:
updating, in response to a switching operation for a target text, the target text in the preview media content of the first mode to a next text which satisfies the preset matching degree condition and is determined based on the target image material.

According to one or more embodiments of the present disclosure, the displaying preview media content of a first mode includes:
displaying preview media content of a second mode, where the preview media content of the second mode includes the target image material and a plurality of candidate texts, and the candidate texts include texts satisfying the preset matching degree condition with relative to the target image material; and
determining, in response to a selection operation for a target candidate text, the target candidate text as the target text, and displaying the preview media content of the first mode.

According to one or more embodiments of the present disclosure, the target image material includes material obtained by performing style conversion processing on the original image material.

According to one or more embodiments of the present disclosure, the target image material includes at least one target image and/or at least one target video.

According to one or more embodiments of the present disclosure, in the case that the target image material includes at least one target video, the target text includes a text satisfying the preset matching degree condition with relative to a preset video frame in the at least one target video.

According to one or more embodiments of the present disclosure, the generation of the target text is associated with a corresponding scenario of the media content generation page.

According to one or more embodiments of the present disclosure, different text styles of the target text correspond to different scenarios.

According to one or more embodiments of the present disclosure, the target text is determined by:
inputting target material into a preset model, where the target material includes all or part of the target image material, and the preset model is configured to determine a similarity between the target material and each text in a preset text library; and
determining a target text from the preset text library according to an output of the preset model.

According to one or more embodiments of the present disclosure, model parameters in the preset model and/or the preset text library are associated with a corresponding scenario of the media content generation page.

According to one or more embodiments of the present disclosure,
the displaying preview media content of a first mode in response to a target function being activated includes:
entering a media content preview page, and displaying preview media content of a first mode in the media content preview page in response to the target function being activated;
where a switch control is displayed in the media content generation page and/or the media content preview page, and the switch control corresponds to the target function.

According to one or more embodiments of the present disclosure, there is provided a media content display apparatus, including:
a material acquisition module, configured to acquire original image material from a media content generation page, where the media content generation page is configured to generate target media content, and the target media content is configured to be sent to a second user or posted as a work of a first user; and
a content display module, configured to display preview media content of a first mode in response to a target function being activated, where the preview media content of the first mode includes target image material and a target text displayed at a target position, the target image material is determined according to the original image material, and the target text includes a text which satisfies a preset matching degree condition and is determined based on the target image material, and the preview media content of the first mode is configured to generate the target media content.

According to one or more embodiments of the present disclosure, there is provided an electronic device, including:
one or more processors; and
a storage device for storing one or more programs, where
the one or more programs, when executed by the one or more processors, cause the one or more processors to realize the media content display method provided by the embodiment of the present disclosure.

According to one or more embodiments of the present disclosure, there is provided a storage medium including computer-executable instructions which, when executed by a computer processor, are configured to perform the media content display method provided by the embodiments of the present disclosure.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A media content display method, comprising: at a first user side,
acquiring original image material from a media content generation page, wherein the media content generation page is configured to generate target media content, and the target media content is configured to be sent to a second user or posted as a work of a first user; and
displaying preview media content of a first mode in response to a target function being activated, wherein the preview media content of the first mode comprises target image material and a target text displayed at a target position, the target image material is determined according to the original image material, the target text comprises a text which satisfies a preset matching degree condition and is determined based on the target image material, and the preview media content of the first mode is configured for generating the target media content.

2. The method according to claim 1, wherein after the displaying preview media content of a first mode, the method further comprises:
generating target media content according to the preview media content of the first mode in response to a preset generation operation.

3. The method according to claim 1 or 2, wherein after the displaying preview media content of a first mode, the method further comprises:
updating, in response to an editing operation for the target text, the target text in the preview media content of the first mode to a text corresponding to an editing result of the editing operation.

4. The method according to any one of claims 1-3, wherein after the displaying preview media content of a first mode, the method further comprises:
updating, in response to a switching operation for the target text, the target text in the preview media content of the first mode to a next text which satisfies the preset matching degree condition and is determined based on the target image material.

5. The method according to any one of claims 1-4, wherein the displaying preview media content of a first mode comprises:
displaying preview media content of a second mode, wherein the preview media content of the second mode comprises the target image material and a plurality of candidate texts, and the plurality of candidate texts comprise a text satisfying the preset matching degree condition with relative to the target image material; and
determining, in response to a selection operation for a target candidate text, the target candidate text as the target text, and displaying the preview media content of the first mode.

6. The method according to any one of claims 1-5, wherein the target image material comprises material obtained by performing style conversion processing on the original image material.

7. The method according to any one of claims 1-6, wherein the target image material comprises at least one target image and/or at least one target video.

8. The method according to claim 7, wherein the target image material comprises at least one target video, and the target text comprises a text satisfying the preset matching degree condition with relative to a preset video frame in the at least one target video.

9. The method according to any one of claims 1-8, wherein a generation of the target text is associated with a corresponding scenario of the media content generation page.

10. The method according to claim 9, wherein different text styles of the target text correspond to different scenarios.

11. The method according to claim 1, wherein the target text is determined by:
inputting target material into a preset model, wherein the target material comprises all or part of the target image material, and the preset model is configured to determine a similarity between the target material and each text in a preset text library; and
determining the target text from the preset text library based on an output of the preset model.

12. The method according to claim 11, wherein model parameters in the preset model and/or the preset text library are associated with a corresponding scenario of the media content generation page.

13. The method according to claim 7, wherein the target image material comprises a plurality of target images, and the target text is determined based on a text satisfying the preset matching degree condition with relative to a first target image among the plurality of target images, or the target text is determined based on a text satisfying the preset matching degree condition with relative to each target image in the plurality of target images.

14. The method according to claim 7, wherein the target image material comprises a plurality of target images, and a plurality of target texts is configured to correspond to the plurality of target images respectively, and the displaying preview media content of a first mode in response to a target function being activated comprises:
sequentially displaying the plurality of target images, and displaying, when displaying each of the plurality of target images, a target text corresponding to a current target image at a target position corresponding to the current target image.

15. The method according to any one of claims 1-14, wherein the displaying preview media content of a first mode in response to a target function being activated comprises:
entering a media content preview page, and displaying the preview media content of the first mode in the media content preview page in response to the target function being activated,
wherein a switch control is displayed in the media content generation page and/or the media content preview page, and the switch control corresponds to the target function.

16. The method according to claim 1, further comprising:
displaying preview media content of a third mode in response to the target function being inactivated, wherein the preview media content of the third mode comprises the target image material and does not comprise the target text.

17. A media content display apparatus at a first user side, comprising:
a material acquisition module, configured to acquire original image material from a media content generation page, wherein the media content generation page is configured to generate target media content, and the target media content is configured to be sent to a second user or posted as a work of a first user; and
a content display module, configured to display preview media content of a first mode in response to a target function being activated, wherein the preview media content of the first mode comprises target image material and a target text displayed at a target position, the target image material is determined according to the original image material, the target text comprises a text which satisfies a preset matching degree condition and is determined based on the target image material, and the preview media content of the first mode is configured for generating the target media content.

18. The apparatus according to claim 17, comprising a module configured to perform the method according to any one of claims 2-16.

19. An electronic device, comprising:
one or more processors; and
a storage device configured to store one or more programs, wherein
the one or more programs, when executed by the one or more processors, cause the one or more processors to implement the method according to any one of claims 1-16.

20. A storage medium comprising computer-executable instructions, wherein the computer-executable instructions, when executed by a computer processor, cause the computer processor to perform the method according to any one of claims 1-16.
